# EUROPEAN PATENT SPECIFICATION

(11) **EP 4 184 295 B1**
(45) Date of publication and mention of the grant of the patent: **09.10.2024**
(21) Application number: 22186143.8
(22) Date of filing: 21.07.2022
(51) Int. Cl.: G06F 3/0362, G06F 3/038, G06F 3/039

(54) **CALIBRATION METHOD AND CALIBRATION APPARATUS FOR KNOB APPLICABLE TO TOUCH PANEL**
KALIBRIERUNGSVERFAHREN UND KALIBRIERUNGSVORRICHTUNG FÜR EINEN KNOPF FÜR EIN BERÜHRUNGSFELD
PROCÉDÉ D'ÉTALONNAGE ET APPAREIL D'ÉTALONNAGE POUR UN BOUTON APPLICABLE À UN PANNEAU TACTILE

(30) Priority: 21.11.2021 US 202117531785
(43) Date of publication of application: 24.05.2023
(73) Proprietor: Himax Technologies Limited, Tainan City 74148 (TW)
(72) Inventor: SU, Chun-Jen, 74148 Tainan City (TW); TSAI, Cheng-Hung, 74148 Tainan City (TW); HUANG, Po-Hsuan, 74148 Tainan City (TW); CHUANG, Chun-Kai, 74148 Tainan City (TW)
(74) Representative: Hoefer & Partner Patentanwälte mbB

(56) References cited:
- US-A1- 2008 192 025
- US-A1- 2008 238 879
- US-A1- 2020 004 348
- US-A1- 2020 233 521

## Description

### Field of the Invention

This invention relates to a user interface (Ul) mechanism design and calibration method for a knob applicable to a touch panel, capable of obtaining at least one sensed position of a sensing pad of the knob, and calculating a position of a center of the knob according to the sensed position of the sensing pad.

### Background of the Invention

Knob devices are often used in general electronic apparatus, such as the knob for volume adjustment on an audio player, the knob for frequency adjustment on a radio and the knob for air conditioning/air volume adjustment on a car console, where many of these electronic apparatuses are equipped with a touch panel. Therefore, how to integrate the knob device and the touch panel to assist user in control has become an issue. When a touch panel is equipped with a knob, a position of the knob may be offset for some reasons. For example, the position of the knob may be offset for positioning error or deterioration of the laminated material due to the aging. The offset of the position will cause the wrong determination of the rotation angle of the knob, and further affect the stability and reliability of the knob. Thus, a novel calibration method and associated architecture are needed without introducing any side effect or in a way that is less likely to introduce a side effect.

US 2020/233521 A1 discloses an operation input device. US 2008/238879 A1 discloses a touch screen input device. US 2020/004348 A1 discloses an information handling system input device. US 2008/192025 A1 discloses a touch screen that is associated with an electronic display.

### Summary of the Invention

The invention aims at providing a technique for determining an accurate position of the center of a knob. This is achieved by a calibration method and an associated calibration apparatus according to the independent claims. The dependent claims pertain to corresponding further developments and improvements.

As will be seen more clearly from the detailed description below, the calibration method is for a knob applicable to a touch panel, wherein the knob comprises at least one sensing pad. The calibration method further comprises: obtaining at least one sensed position of each sensing pad of said at least one sensing pad by sensing a position of said each sensing pad through the touch panel; and calculating a position of a center of the knob by using a formula of a radius of a circumscribed circle according said at least one sensed position of said each sensing pad.

The calibration apparatus is for a knob applicable to a touch panel, wherein the knob comprises at least one sensing pad. The calibration apparatus further comprises a sensing processing circuit and a calculation circuit. The sensing processing circuit is configured to obtain at least one sensed position of each sensing pad of said at least one sensing pad by sensing a position of said each sensing pad through the touch panel. The calculation circuit is configured to calculate a position of a center of the knob by using a formula of a radius of a circumscribed circle according said at least one sensed position of said each sensing pad.

The present invention calibration method and calibration apparatus are able to obtain the new center of the knob by calculating. Through pressing or rotating the knob, the position of one or more sensing pads can be obtained. The new center of the knob can be calculated according to enough sensed positions of one or more sensing pads. The calibration method of the present invention provides an accurate position of the center of the knob, thereby preventing the rotation angle of the knob from being determined erroneously and improving the stability and reliability of the knob.

### Brief Description of the Drawings

In the following, the invention is further illustrated by way of example, taking reference to the following drawings.
- FIG. 1: is a diagram of a calibration apparatus for a knob applicable to a touch panel
- FIG. 2: is a diagram illustrating a position offset of a knob and affected rotation angles.
- FIG. 3: is a flowchart of a calibration method for the knob.
- FIG. 4: is a diagram illustrating the calibration method for the knob with only a single sensing pad.
- FIG. 5: is a diagram illustrating the calibration method for the knob with two single sensing pads according to an embodiment of the present invention.
- FIG. 6: is a diagram illustrating the calibration method for the knob with three single sensing pads with distribution range being smaller than a quarter circle of the knob according to an embodiment of the present invention.
- FIG. 7: is a diagram illustrating the calibration method for the knob with three single sensing pads with distribution range being not smaller than a quarter circle of the knob.

### Detailed Description

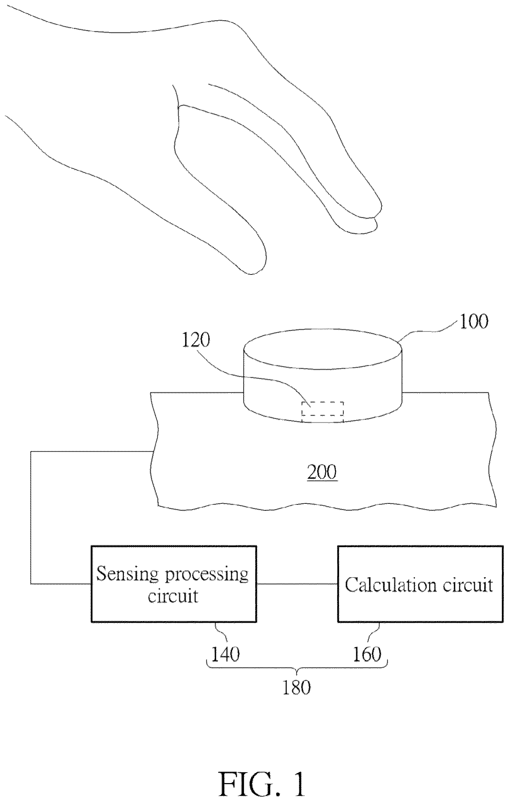

Refer to FIG. 1. FIG. 1 is a diagram of a calibration apparatus 180 for a knob 100 applicable to a touch panel 200. As shown in FIG.1, the knob 100 is arranged on the touch panel 200, and comprises at least one sensing pad 120. In one embodiment not covered by the claims, the knob 100 may comprise only a single sensing pad 120. In another embodiment according to the invention, the knob 100 may comprise multiple sensing pads 120. For brevity, only one sensing pad 120 is shown in FIG. 1. Taking the knob 100 with only a single sensing pad 120 as an example, when a user operates the knob 100 by contacting the knob 100, the knob 100 forms a conductive path through the sensing pad 120. This path allows the user's finger touching the knob 100 to be connected to the touch panel 200 through the conductive path, which is equivalent to allowing the user to indirectly control the touch panel 200. In other words, when the user touches the knob 100, the touch panel 200 generates a sensing signal in response to a loop formed by the touch panel 200, the knob 100 and the user. The sensing signal comprises position information of the sensing pad 120. Furthermore, when the user rotates the knob 100, the touch panel 200 generates multiple sensing signals in response to the movement and positions of the sensing pad 120, such that a rotation angle may be calculated through the positions of the sensing pad 120. In addition, the calibration apparatus 180 for the knob 100 is provided for performing calibration on the position of the knob. The calibration apparatus 180 comprises a sensing processing circuit 140 and a calculation circuit 160. The sensing processing circuit 140 is configured to obtain at least one sensed position of each sensing pad 120 by sensing a position of each sensing pad 120 through the touch panel 200. The calculation circuit 160 is configured to calculate a position of a center of the knob 100 by using a formula of a radius of a circumscribed circle according the at least one sensed position of each sensing pad 120, such that a new position of the center of the knob 100 may be obtained to replace an original position of the center of the knob 100.

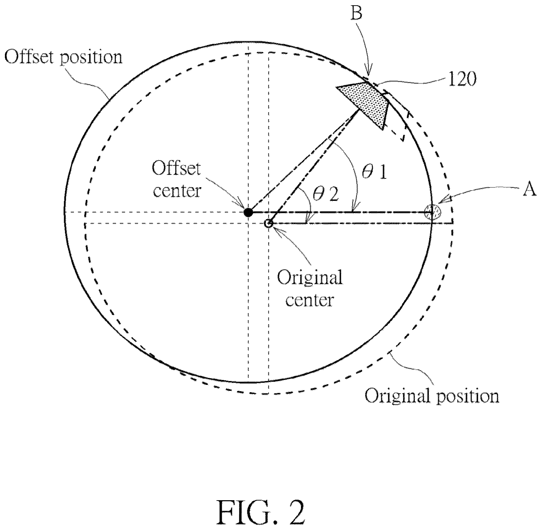

A position of the knob may be offset for some reason, such that the rotation angle may be erroneously determined for an offset center of the knob. Refer to FIG. 2. FIG. 2 is a diagram illustrating a position offset of the knob 100 and affected rotation angles. As shown in FIG. 2, for example, the knob 100 is offset from an original position to an offset position, such that a center of the knob 100 is also offset. Assuming that the sensing pad 120 is rotated from a position A to a position B (in the offset position), the position B of the sensing pad 120 is the sensed position, such that the sensing pad 120 is determined being rotated by a rotation angle θ1 relative to the offset center. Assuming that the center of the knob 100 is offset and not calibrated, the position of the center is regarded as the position of the original center. As a result, since the sensed position of the sensing pad 120 is the position B, a rotation angle of the sensing pad 120 relative to the original center is calculated to be θ2, such that the rotation angle of the knob is erroneously determined as the rotation angle θ2. Therefore, the position of the center of the knob has to be corrected.

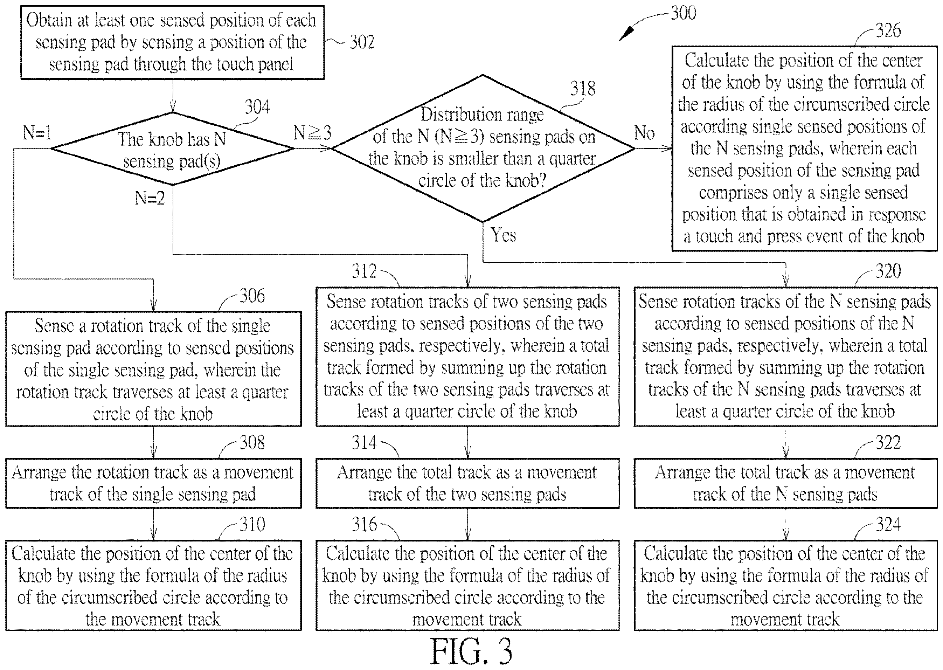

Refer to FIG. 3. FIG. 3 is a flowchart 300 of a calibration method for the knob 100. The calibration method 300 may be employed by the calibration apparatus 180 shown in FIG. 1, and comprises the following steps.

| | |
|---|---|
| Step 302: | Obtain at least one sensed position of each sensing pad by sensing a position of the sensing pad through the touch panel. |
| Step 304: | Determine the quantity of sensing pads employed by the knob 100. The knob 100 has N sensing pads and N is a positive integer. If the knob 100 has only a single sensing pad (labeled "N=1" in FIG. 3 for brevity), the flow proceeds with Step 306; If the knob 100 has only two sensing pads (labeled "N=2" in FIG. 3 for brevity), the flow proceeds with Step 312; If the knob 100 has three or more sensing pads (labeled "N≥3" in FIG. 3 for brevity), the flow proceeds with Step 320. |
| Step 306: | Sense a rotation track of the single sensing pad according to sensed positions of the single sensing pad, wherein the rotation track traverses at least a quarter circle of the knob. |
| Step 308: | Arrange the rotation track as a movement track of the single sensing pad. |
| Step 310: | Calculate the position of the center of the knob by using the formula of the radius of the circumscribed circle according to the movement track. |
| Step 312: | Sense rotation tracks of two sensing pads according to sensed positions of the two sensing pads, respectively, wherein a total track formed by summing up the rotation tracks of the two sensing pads traverses at least a quarter circle of the knob. |
| Step 314: | Arrange the total track as a movement track of the two sensing pads. |
| Step 316: | Calculate the position of the center of the knob by using the formula of the radius of the circumscribed circle according to the movement track. |
| Step 318: | Determine whether a distribution range of the N (N≥3) sensing pads on the knob is smaller than a quarter circle of the knob. If Yes, the flow proceeds with Step 320; If No, the flow proceeds with Step 326. |
| Step 320: | Sense rotation tracks of the N sensing pads according to sensed positions of the N sensing pads, respectively, wherein a total track formed by summing up the rotation tracks of the N sensing pads traverses at least a quarter circle of the knob. |
| Step 322: | Arrange the total track as a movement track of the N sensing pads. |
| Step 324: | Calculate the position of the center of the knob by using the formula of the radius of the circumscribed circle according to the movement track. |
| Step 326: | Calculate the position of the center of the knob by using the formula of the radius of the circumscribed circle according to single sensed positions of the N sensing pads, wherein each sensed position of the sensing pad comprises only a single sensed position that is obtained in response a touch and press event of the knob. |

The calibration method uses a formula of a radius of a circumscribed circle to calculate a new position of the center of the knob according to the multiple sensed positions of the sensing pad(s). A distribution range of the multiple sensed positions has to be not smaller (e.g., greater and equal) than a quarter circle of the knob for accuracy of calculation. Therefore, in response to the knobs having different numbers of sensing pads, the knobs are required to be rotated at different angles or be pressed.

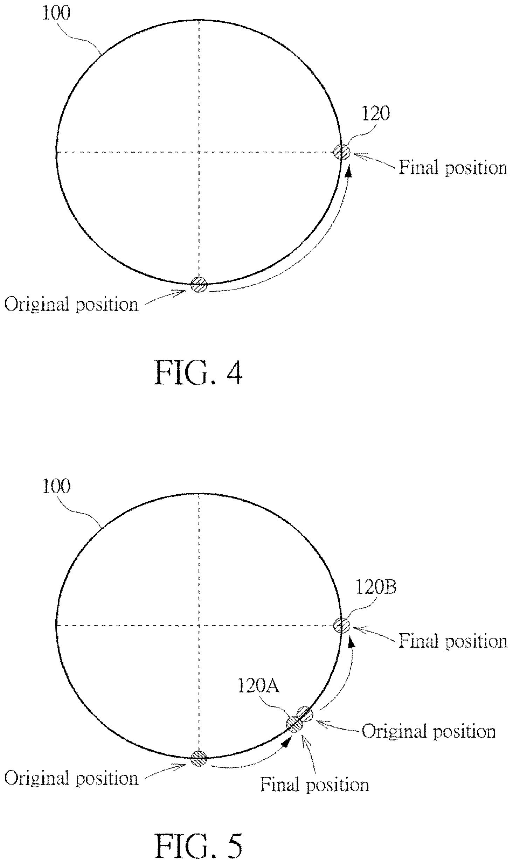

Refer to FIG. 4. FIG. 4 is a diagram illustrating the calibration method for the knob 100 with only a single sensing pad 120. For obtaining the sensed positions distributed along a partial perimeter not smaller than a quarter circle of the knob 100, the knob 100 with only a single sensing pad 120 needs to be rotated at least a quarter circle of the knob. In other words, the knob 100 with only a single sensing pad 120 needs to be rotated by at least 90 degrees. The sensed positions are generated in response a touch and rotation event of the knob 100. An original position and a final position of the sensing pad 120 are distributed along a partial perimeter not smaller than a quarter circle of the knob, such that the original position, the final position and any position on the movement track of the single sensing pad 120 can be used to calculate the position of the center of the knob 100.

Refer to FIG. 5. FIG. 5 is a diagram illustrating the calibration method for the knob 100 with two sensing pads 120 according to an embodiment of the present invention. Similarly, for obtaining the sensed positions distributed along a partial perimeter not smaller than a quarter circle of the knob 100, the knob 100 having two sensing pad 120A and 120B needs to be rotated. The sensed positions are generated in response a touch and rotation event of the knob 100. The two sensing pads 120A and 120B have two rotation tracks respectively. A total track is formed by summing up the rotation tracks of the two sensing pads 120A and 120B, and the total track has to traverse at least a quarter circle of the knob. As shown in FIG. 5, an original position of the sensing pad 120A and a final position of the sensing pad 120B are distributed along a partial perimeter not smaller than a quarter circle of the knob, such that the original position of the sensing pad 120A, the final position of the sensing pad 120B and any position on the rotation track of any sensing pad can be used to calculate the position of the center of the knob 100. It should be noticed that an overlapped part of the two rotation tracks is considered as one rotation track in the total track.

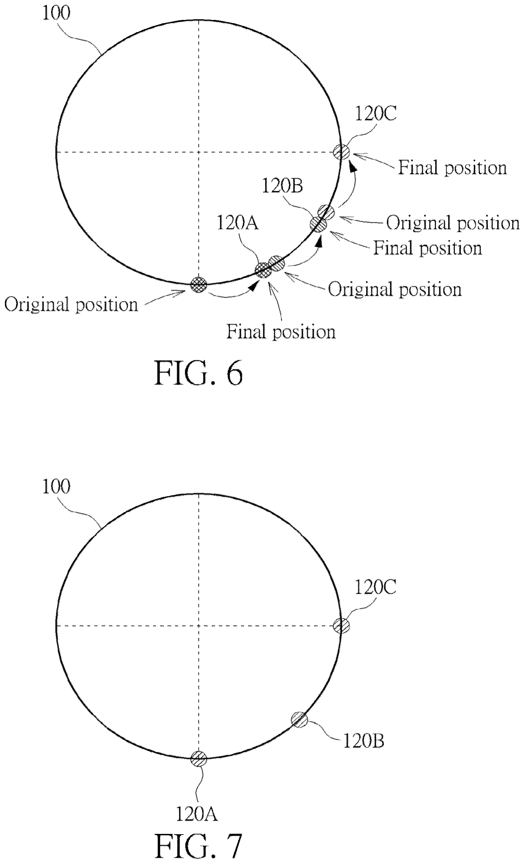

Refer to FIG. 6. FIG. 6 is a diagram illustrating the calibration method for the knob 100 having three single sensing pads 120 with a distribution range being smaller than a quarter circle of the knob according to an embodiment of the present invention. Similarly, for obtaining the sensed positions distributed along a partial perimeter not smaller than a quarter circle of the knob 100, the knob 100 having three sensing pad 120A, 120B and 120C needs to be rotated. The sensed positions are generated in response a touch and rotation event of the knob 100. The three sensing pads 120A, 120B and 120C have three rotation tracks, respectively. A total track is formed by summing up the rotation tracks of the three sensing pads 120A, 120B and 120C, and the total track has to traverse at least a quarter circle of the knob. As shown in FIG. 6, an original position of the sensing pad 120A and a final position of the sensing pad 120C are distributed along a partial perimeter not smaller than a quarter circle of the knob, such that the original position of the sensing pad 120A, the final position of the sensing pad 120C and any position on the rotation track of any sensing pad can be used to calculate the position of the center of the knob 100. It should be noticed that an overlapped part of the three rotation tracks is considered as one rotation track in the total track. Furthermore, if a knob has more than three sensing pads with distribution range being smaller than a quarter circle of the knob, the total track also has to traverse at least a quarter circle of the knob, in order to obtain the necessary sensed positions.

Refer to FIG. 7. FIG. 7 is a diagram illustrating the calibration method for the knob 100 with three single sensing pads 120 with a distribution range being not smaller than a quarter circle of the knob. For obtaining the sensed positions distributed along a partial perimeter not smaller than a quarter circle of the knob, the knob 100 having three sensing pad 120A, 120B and 120C may be directly pressed without being rotated. As shown in FIG. 7, since the three sensing pad 120A, 120B and 120C are distributed along a partial perimeter not smaller than a quarter circle of the knob, the positions of the three sensing pad 120A, 120B and 120C can be used to calculate the position of the center of the knob 100. The sensed positions are generated in response a touch and press event of the knob 100. It should be noticed that a press event of the knob 100 is to obtain the positions of the three sensing pad 120A, 120B and 120C. In some embodiments, a slightly touch can let the touch panel sense the positions of the three sensing pads of the knob. Furthermore, if a knob has more than three sensing pads with a distribution range being not smaller than a quarter circle of the knob, the position of the center of the knob can be calculated according to the original positions of the sensing pads.

Specifically, there are actually some differences in the positions of the center of the knob calculated according to different sensed positions in the rotation track. Therefore, at least one other position of the center of the knob can be calculated according another sensed positions of each sensing pad, and an average position of the center of the knob can be obtain by performing average calculation on multiple calculated positions of the center of the knob to make the calibrated position of the center more accurate, where the multiple calculated positions comprise the position and the other position of the center of the knob.

According to the above arrangement, the present invention calibration method and calibration apparatus are able to obtain the new position of the center of the knob by calculating. Through pressing or rotating the knob, the positions of one or more sensing pads can be obtained. The new position of the center of the knob can be calculated according enough sensed positions of two or more sensing pads. The calibration method of the present invention provides an accurate position of the center of the knob, thereby preventing the rotation angle of the knob from being determined erroneously and improving the stability and reliability of the knob.

## Claims

1. A calibration method for a knob (100) applicable to a touch panel (200), the knob (100) comprising at least one sensing pad (120), the calibration method comprising:
obtaining at least one sensed position of each sensing pad of said at least one sensing pad (120) by sensing a position of said each sensing pad through the touch panel (200); and
calculating a position of a center of the knob (100) by using a formula of a radius of a circumscribed circle according to said at least one sensed position of said each sensing pad (120);
wherein said at least one sensed position of said each sensing pad (120) comprises multiple sensed positions that are obtained in response to a touch and rotation event of the knob (100);
**characterized in that** the knob (100) comprises only two sensing pads (120A, 120B), and calculating the position of the center of the knob (100) by using the formula of the radius of the circumscribed circle according to said at least one sensed position of said each sensing pad (120A, 120B) comprises:
sensing rotation tracks of the two sensing pads (120A, 120B) according to sensed positions of the two sensing pads (120A, 120B), respectively, wherein a total track formed by summing up the rotation tracks of the two sensing pads (120A, 120B) traverses at least a quarter circle of the knob (100);
arranging the total track as a movement track of the two sensing pads (120A, 120B); and
calculating the position of the center of the knob (100) by using the formula of the radius of the circumscribed circle according to the movement track;
wherein an overlapped part of the two rotation tracks is considered as one rotation track.

2. A calibration method for a knob (100) applicable to a touch panel (200), the knob (100) comprising at least one sensing pad (120), the calibration method comprising:
obtaining at least one sensed position of each sensing pad of said at least one sensing pad (120) by sensing a position of said each sensing pad through the touch panel (200); and
calculating a position of a center of the knob (100) by using a formula of a radius of a circumscribed circle according to said at least one sensed position of said each sensing pad (120);
wherein said at least one sensed position of said each sensing pad (120) comprises multiple sensed positions that are obtained in response to a touch and rotation event of the knob (100);
**characterized in that** the knob (100) comprises N sensing pads (120A, 120B, 120C), N is a positive integer not smaller than 3, a distribution range of the N sensing pads (120A, 120B, 120C) on the knob (100) is smaller than a quarter circle of the knob (100), and calculating the position of the center of the knob (100) by using the formula of the radius of the circumscribed circle according to said at least one sensed position of said each sensing pad (120A, 120B, 120C) comprises:
sensing rotation tracks of the N sensing pads (120A, 120B, 120C) according to sensed positions of the N sensing pads (120A, 120B, 120C), respectively, wherein a total track formed by summing up the rotation tracks of the N sensing pads (120A, 120B, 120C) traverses at least a quarter circle of the knob (100);
arranging the total track as a movement track of the N sensing pads (120A, 120B, 120C); and
calculating the position of the center of the knob (100) by using the formula of the radius of the circumscribed circle according to the movement track;
wherein an overlapped part resulting from at least two of the N rotation tracks is considered as one rotation track.

3. The calibration method of claim 1 or 2, further **characterized by**:
obtaining at least one other sensed position of said each sensing pad (120) by sensing the position of said each sensing pad (120) through the touch panel (200), wherein said at least one other sensed position of said each sensing pad (120) is not identical to said at least one sensed position of said each sensing pad (120);
calculating another position of the center of the knob (100) by using the formula of the radius of the circumscribed circle according to said at least one other sensed position of said each sensing pad (120); and
obtaining an average position of the center of the knob (100) by performing average calculation on a plurality of calculated positions of the center of the knob (100), wherein the plurality of calculated positions comprise the position and the other position.

4. A calibration apparatus (180) for a knob (100) applicable to a touch panel (200), the knob (100) comprising at least one sensing pad (120), the calibration apparatus (180) comprising:
a sensing processing circuit (140), configured to obtain at least one sensed position of each sensing pad of said at least one sensing pad (120) by sensing a position of said each sensing pad (120) through the touch panel (200); and
a calculation circuit (160), configured to calculate a position of a center of the knob (100) by using a formula of a radius of a circumscribed circle according to said at least one sensed position of said each sensing pad (120);
wherein said at least one sensed position of said each sensing pad (120) comprises multiple sensed positions that are obtained in response to a touch and rotation event of the knob (100);
**characterized in that** the knob (100) comprises only two sensing pads (120A, 120B), and calculating the position of the center of the knob (100) by using the formula of the radius of the circumscribed circle according to said at least one sensed position of said each sensing pad (120A, 120B) comprises:
sensing rotation tracks of the two sensing pads (120A, 120B) according to sensed positions of the two sensing pads (120A, 120B), respectively, wherein a total track formed by summing up the rotation tracks of the two sensing pads (120A, 120B) traverses at least a quarter circle of the knob (100);
arranging the total track as a movement track of the two sensing pads (120A, 120B); and
calculating the position of the center of the knob (100) by using the formula of the radius of the circumscribed circle according to the movement track;
wherein an overlapped part of the two rotation tracks is considered as one rotation track.

5. A calibration apparatus (180) for a knob (100) applicable to a touch panel (200), the knob (100) comprising at least one sensing pad (120), the calibration apparatus (180) comprising:
a sensing processing circuit (140), configured to obtain at least one sensed position of each sensing pad of said at least one sensing pad (120) by sensing a position of said each sensing pad (120) through the touch panel (200); and
a calculation circuit (160), configured to calculate a position of a center of the knob (100) by using a formula of a radius of a circumscribed circle according to said at least one sensed position of said each sensing pad (120);
**characterized in that** the knob (100) comprises N sensing pads (120A, 120B, 120C), N is a positive integer not smaller than 3, a distribution range of the N sensing pads (120A, 120B, 120C) on the knob (100) is smaller than a quarter circle of the knob (100), and calculating the position of the center of the knob (100) by using the formula of the radius of the circumscribed circle according to said at least one sensed position of said each sensing pad (120A, 120B, 120C) comprises:
sensing rotation tracks of the N sensing pads (120A, 120B, 120C) according to sensed positions of the N sensing pads (120A, 120B, 120C), respectively, wherein a total track formed by summing up the rotation tracks of the N sensing pads (120A, 120B, 120C) traverses at least a quarter circle of the knob (100);
arranging the total track as a movement track of the N sensing pads (120A, 120B, 120C); and
calculating the position of the center of the knob (100) by using the formula of the radius of the circumscribed circle according to the movement track;
wherein an overlapped part resulting from at least two of the N rotation tracks is considered as one rotation track.

## Patentansprüche

1. Kalibrierungsverfahren für einen Knopf (100), der in einem Berührungsfeld (200) einsetzbar ist, wobei der Knopf (100) mindestens ein Sensorfeld (120) aufweist, wobei das Kalibrierungsverfahren umfasst:
Erhalten mindestens einer erkannten Position jedes Sensorfelds des mindestens einen Sensorfelds (120) durch Erkennen einer Position jedes Sensorfelds durch das Berührungsfeld (200); und
Berechnen einer Position eines Zentrums des Knopfs (100) durch Verwenden einer Formel eines Radius eines Umkreises gemäß der mindestens einen erkannten Position jedes Sensorfelds (120);
wobei die mindestens eine erkannte Position jedes Sensorfelds (120) mehrere erkannte Positionen umfasst, welche als Reaktion auf ein Berührungs- und Rotationsereignis des Knopfs (100) erhalten werden;
**dadurch gekennzeichnet, dass** der Knopf (100) nur zwei Sensorfelder (120A, 120B) aufweist, und das Berechnen der Position des Zentrums des Knopfs (100) durch Verwenden der Formel des Radius des Umkreises gemäß der mindestens einen erkannten Position jedes Sensorfelds (120A, 120B) umfasst:
jeweils Erkennen von Rotationswegen der zwei Sensorfelder (120A, 120B) gemäß erkannten Positionen der zwei Sensorfelder (120A, 120B), wobei ein Gesamtweg, der durch Aufsummieren der Rotationswege der zwei Sensorfelder (120A, 120B) gebildet wird, mindestens einen Viertelkreis des Knopfs (100) überquert;
Anordnen des Gesamtwegs als einen Bewegungsweg der zwei Sensorfelder (120A, 120B); und
Berechnen der Position des Zentrums des Knopfs (100) durch Verwenden der Formel des Radius des Umkreises gemäß dem Bewegungsweg;
wobei ein überlappender Teil der zwei Rotationswege als ein Rotationsweg betrachtet wird.

2. Kalibrierungsverfahren für einen Knopf (100), der in einem Berührungsfeld (200) einsetzbar ist, wobei der Knopf (100) mindestens ein Sensorfeld (120) aufweist, wobei das Kalibrierungsverfahren umfasst:
Erhalten mindestens einer erkannten Position jedes Sensorfelds des mindestens einen Sensorfelds (120) durch Erkennen einer Position jedes Sensorfelds durch das Berührungsfeld (200); und
Berechnen einer Position eines Zentrums des Knopfs (100) durch Verwenden einer Formel eines Radius eines Umkreises gemäß der mindestens einen erkannten Position jedes Sensorfelds (120);
wobei die mindestens eine erkannte Position jedes Sensorfelds (120) mehrere erkannte Positionen umfasst, welche als Reaktion auf ein Berührungs- und Rotationsereignis des Knopfs (100) erhalten werden;
**dadurch gekennzeichnet, dass** der Knopf (100) N Sensorfelder (120A, 120B, 120C) aufweist, N eine positive ganze Zahl nicht kleiner als 3 ist, ein Verteilungsbereich der N Sensorfelder (120A, 120B, 120C) auf dem Knopf (100) kleiner ist als ein Viertelkreis des Knopfs (100), und das Berechnen der Position des Zentrums des Knopfs (100) durch Verwenden der Formel des Radius des Umkreises gemäß der mindestens einen erkannten Position jedes Sensorfelds (120A, 120B, 120C) umfasst:
jeweils Erkennen von Rotationswegen der N Sensorfelder (120A, 120B, 120C) gemäß erkannten Positionen der N Sensorfelder (120A, 120B, 120C), wobei ein Gesamtweg, der durch ein Aufsummieren der Rotationswege der N Sensorfelder (120A, 120B, 120C) gebildet wird, mindestens einen Viertelkreis des Knopfs (100) überquert;
Anordnen des Gesamtwegs als einen Bewegungsweg der N Sensorfelder (120A, 120B, 120C); und
Berechnen der Position des Zentrums des Knopfs (100) durch Verwenden der Formel des Radius des Umkreises gemäß dem Bewegungsweg;
wobei ein überlappender Teil, der sich aus mindestens zwei der N Rotationswege ergibt, als ein Rotationsweg betrachtet wird.

3. Kalibrierungsverfahren gemäß Anspruch 1 oder 2, weiter **gekennzeichnet durch**:
Erhalten mindestens einer anderen erkannten Position jedes Sensorfelds (120) durch Erkennen der Position jedes Sensorfelds (120) durch das Berührungsfeld (200), wobei die mindestens eine andere erkannte Position jedes Sensorfelds (120) nicht identisch mit der mindestens einen erkannten Position jedes Sensorfelds (120) ist;
Berechnen einer anderen Position des Zentrums des Knopfs (100) durch Verwenden der Formel des Radius des Umkreises gemäß der mindestens einen anderen erkannten Position jedes Sensorfelds (120); und
Erhalten einer mittleren Position des Zentrums des Knopfs (100) durch Ausführen einer Mittelwertberechnung auf einer Mehrzahl von berechneten Positionen des Zentrums des Knopfs (100), wobei die Mehrzahl von berechneten Positionen die Position und die andere Position umfasst.

4. Kalibrierungsvorrichtung (180) für einen Knopf (100), der in einem Berührungsfeld (200) einsetzbar ist, wobei der Knopf (100) mindestens ein Sensorfeld (120) aufweist, wobei die Kalibrierungsvorrichtung (180) aufweist:
eine Sensorverarbeitungsschaltung (140), die eingerichtet ist, mindestens eine erkannte Position jedes Sensorfelds des mindestens einen Sensorfelds (120) durch Erkennen einer Position jedes Sensorfelds (120) durch das Berührungsfeld (200) zu erhalten; und
eine Berechnungsschaltung (160), die eingerichtet ist, eine Position eines Zentrums des Knopfs (100) durch Verwenden einer Formel eines Radius eines Umkreises gemäß der mindestens einen erkannten Position jedes Sensorfelds (120) zu berechnen;
wobei die mindestens eine erkannte Position jedes Sensorfelds (120) mehrere erkannte Positionen umfasst, welche als Reaktion auf ein Berührungs- und Rotationsereignis des Knopfs (100) erhalten werden;
**dadurch gekennzeichnet, dass** der Knopf (100) nur zwei Sensorfelder (120A, 120B) aufweist, und das Berechnen der Position des Zentrums des Knopfs (100) durch Verwenden der Formel des Radius des Umkreises gemäß der mindestens einen erkannten Position jedes Sensorfelds (120A, 120B) umfasst:
jeweils Erkennen von Rotationswegen der zwei Sensorfelder (120A, 120B) gemäß erkannten Positionen der zwei Sensorfelder (120A, 120B), wobei ein Gesamtweg, der durch Aufsummieren der Rotationswege der zwei Sensorfelder (120A, 120B) gebildet wird, mindestens einen Viertelkreis des Knopfs (100) überquert;
Anordnen des Gesamtwegs als einen Bewegungsweg der zwei Sensorfelder (120A, 120B); und
Berechnen der Position des Zentrums des Knopfs (100) durch Verwenden der Formel des Radius des Umkreises gemäß dem Bewegungsweg;
wobei ein überlappender Teil der zwei Rotationswege als ein Rotationsweg betrachtet wird.

5. Kalibrierungsvorrichtung (180) für einen Knopf (100), der in einem Berührungsfeld (200) einsetzbar ist, wobei der Knopf (100) mindestens ein Sensorfeld (120) aufweist, wobei die Kalibrierungsvorrichtung (180) aufweist:
eine Sensorverarbeitungsschaltung (140), die eingerichtet ist, mindestens eine erkannte Position jedes Sensorfelds des mindestens einen Sensorfelds (120) durch Erkennen einer Position jedes Sensorfelds (120) durch das Berührungsfeld (200) zu erhalten; und
eine Berechnungsschaltung (160), die eingerichtet ist, eine Position eines Zentrums des Knopfs (100) durch Verwenden einer Formel eines Radius eines Umkreises gemäß der mindestens einen erkannten Position jedes Sensorfelds (120) zu berechnen;
**dadurch gekennzeichnet, dass** der Knopf (100) N Sensorfelder (120A, 120B, 120C) aufweist, N eine positive ganze Zahl nicht kleiner als 3 ist, ein Verteilungsbereich der N Sensorfelder (120A, 120B, 120C) auf dem Knopf (100) kleiner ist als ein Viertelkreis des Knopfs (100), und das Berechnen der Position des Zentrums des Knopfs (100) durch Verwenden der Formel des Radius des Umkreises gemäß der mindestens einen erkannten Position jedes Sensorfelds (120A, 120B, 120C) umfasst:
jeweiliges Erkennen von Rotationswegen der N Sensorfelder (120A, 120B, 120C) gemäß erkannten Positionen der N Sensorfelder (120A, 120B, 120C), wobei ein Gesamtweg, der durch ein Aufsummieren der Rotationswege der N Sensorfelder (120A, 120B, 120C) gebildet wird, mindestens einen Viertelkreis des Knopfs (100) überquert;
Anordnen des Gesamtwegs als einen Bewegungsweg der N Sensorfelder (120A, 120B, 120C); und
Berechnen der Position des Zentrums des Knopfs (100) durch Verwenden der Formel des Radius des Umkreises gemäß dem Bewegungsweg;
wobei ein überlappender Teil, der sich aus mindestens zwei der N Rotationswege ergibt, als ein Rotationsweg betrachtet wird.

## Revendications

1. Procédé d'étalonnage d'un bouton (100) applicable à un panneau tactile (200), le bouton (100) comprenant au moins un pavé de détection (120), le procédé d'étalonnage comprenant :
l'obtention d'au moins une position détectée de chaque pavé de détection dudit au moins un pavé de détection (120) par la détection d'une position dudit chaque pavé de détection à travers le panneau tactile (200) ; et
le calcul d'une position d'un centre du bouton (100) à l'aide d'une formule d'un rayon d'un cercle circonscrit selon ladite au moins une position détectée dudit chaque pavé de détection (120) ;
dans lequel ladite au moins une position détectée dudit chaque pavé de détection (120) comprend de multiples positions détectées qui sont obtenues en réponse à un événement d'effleurement et de rotation du bouton (100) ;
**caractérisé en ce que** le bouton (100) ne comprend que deux pavés de détection (120A, 120B), et le calcul de la position du centre du bouton (100) à l'aide de la formule du rayon du cercle circonscrit selon ladite au moins une position détectée dudit chaque pavé de détection (120A, 120B) comprend :
la détection des pistes de rotation des deux pavés de détection (120A, 120B) selon les positions détectées des deux pavés de détection (120A, 120B), respectivement, dans laquelle une piste totale formée par la sommation des pistes de rotation des deux pavés de détection (120A, 120B) parcourt au moins un quart de cercle du bouton (100) ;
l'agencement de la piste totale en tant qu'une piste de mouvement des deux pavés de détection (120A, 120B) ; et
le calcul de la position du centre du bouton (100) à l'aide de la formule du rayon du cercle circonscrit selon la piste de mouvement ;
dans lequel une partie recouverte des deux pistes de rotation est considérée comme une seule piste de rotation.

2. Procédé d'étalonnage d'un bouton (100) applicable à un panneau tactile (200), le bouton (100) comprenant au moins un pavé de détection (120), le procédé d'étalonnage comprenant :
l'obtention d'au moins une position détectée de chaque pavé de détection dudit au moins un pavé de détection (120) par la détection d'une position dudit chaque pavé de détection à travers le panneau tactile (200) ; et
le calcul d'une position d'un centre du bouton (100) à l'aide d'une formule d'un rayon d'un cercle circonscrit selon ladite au moins une position détectée dudit chaque pavé de détection (120) ;
dans lequel ladite au moins une position détectée dudit chaque pavé de détection (120) comprend de multiples positions détectées qui sont obtenues en réponse à un événement d'effleurement et de rotation du bouton (100) ;
**caractérisé en ce que** le bouton (100) comprend N pavés de détection (120A, 120B, 120C), N est un nombre entier positif non inférieur à 3, une plage de répartition des N pavés de détection (120A, 120B, 120C) sur le bouton (100) est inférieure à un quart de cercle du bouton (100), et le calcul de la position du centre du bouton (100) à l'aide de la formule du rayon du cercle circonscrit selon ladite au moins une position détectée dudit chaque pavé de détection (120A, 120B, 120C) comprend :
la détection des pistes de rotation des N pavés de détection (120A, 120B, 120C) selon les positions détectées des N pavés de détection (120A, 120B, 120C), respectivement, dans laquelle une piste totale formée par la sommation des pistes de rotation des N pavés de détection (120A, 120B, 120C) parcourt au moins un quart de cercle du bouton (100) ;
l'agencement de la piste totale en tant qu'une piste de mouvement des N pavés de détection (120A, 120B, 120C) ; et
le calcul de la position du centre du bouton (100) à l'aide de la formule du rayon du cercle circonscrit selon la piste de mouvement ;
dans lequel une partie recouverte résultant d'au moins deux des N pistes de rotation est considérée comme une seule piste de rotation.

3. Procédé d'étalonnage de la revendication 1 ou 2, **caractérisé en outre par** :
l'obtention d'au moins une autre position détectée dudit chaque pavé de détection (120) par la détection de la position dudit chaque pavé de détection (120) à travers le panneau tactile (200), dans laquelle ladite au moins une autre position détectée dudit chaque pavé de détection (120) n'est pas identique à ladite au moins une position détectée dudit chaque pavé de détection (120) ;
le calcul d'une autre position du centre du bouton (100) à l'aide de la formule du rayon du cercle circonscrit selon ladite au moins une autre position détectée dudit chaque pavé de détection (120) ; et
l'obtention d'une position moyenne du centre du bouton (100) en effectuant un calcul de moyenne sur une pluralité de positions calculées du centre du bouton (100), dans laquelle la pluralité de positions calculées comprend la position et l'autre position.

4. Appareil d'étalonnage (180) d'un bouton (100) applicable à un panneau tactile (200), le bouton (100) comprenant au moins un pavé de détection (120), l'appareil d'étalonnage (180) comprenant :
un circuit de traitement de détection (140), configuré pour obtenir au moins une position détectée de chaque pavé de détection dudit au moins un pavé de détection (120) par la détection d'une position dudit chaque pavé de détection (120) à travers le panneau tactile (200) ; et
un circuit de calcul (160), configuré pour calculer une position d'un centre du bouton (100) à l'aide d'une formule d'un rayon d'un cercle circonscrit selon ladite au moins une position détectée dudit chaque pavé de détection (120) ;
dans lequel ladite au moins une position détectée dudit chaque pavé de détection (120) comprend de multiples positions détectées qui sont obtenues en réponse à un événement d'effleurement et de rotation du bouton (100) ;
**caractérisé en ce que** le bouton (100) ne comprend que deux pavés de détection (120A, 120B), et le calcul de la position du centre du bouton (100) à l'aide de la formule du rayon du cercle circonscrit selon ladite au moins une position détectée dudit chaque pavé de détection (120A, 120B) comprend :
la détection des pistes de rotation des deux pavés de détection (120A, 120B) selon les positions détectées des deux pavés de détection (120A, 120B), respectivement, dans laquelle une piste totale formée par la sommation des pistes de rotation des deux pavés de détection (120A, 120B) parcourt au moins un quart de cercle du bouton (100) ;
l'agencement de la piste totale en tant qu'une piste de mouvement des deux pavés de détection (120A, 120B) ; et
le calcul de la position du centre du bouton (100) à l'aide de la formule du rayon du cercle circonscrit selon la piste de mouvement ;
dans lequel une partie recouverte des deux pistes de rotation est considérée comme une seule piste de rotation.

5. Appareil d'étalonnage (180) d'un bouton (100) applicable à un panneau tactile (200), le bouton (100) comprenant au moins un pavé de détection (120), l'appareil d'étalonnage (180) comprenant :
un circuit de traitement de détection (140), configuré pour obtenir au moins une position détectée de chaque pavé de détection dudit au moins un pavé de détection (120) par la détection d'une position dudit chaque pavé de détection à travers le panneau tactile (200) ; et
un circuit de calcul (160), configuré pour calculer une position d'un centre du bouton (100) à l'aide d'une formule d'un rayon d'un cercle circonscrit selon ladite au moins une position détectée dudit chaque pavé de détection (120) ;
**caractérisé en ce que** le bouton (100) comprend N pavés de détection (120A, 120B, 120C), N est un nombre entier positif non inférieur à 3, une plage de répartition des N pavés de détection (120A, 120B, 120C) sur le bouton (100) est inférieure à un quart de cercle du bouton (100), et le calcul de la position du centre du bouton (100) à l'aide de la formule du rayon du cercle circonscrit selon ladite au moins une position détectée dudit chaque pavé de détection (120A, 120B, 120C) comprend :
la détection des pistes de rotation des N pavés de détection (120A, 120B, 120C) selon les positions détectées des N pavés de détection (120A, 120B, 120C), respectivement, dans laquelle une piste totale formée par la sommation des pistes de rotation des N pavés de détection (120A, 120B, 120C) parcourt au moins un quart de cercle du bouton (100) ;
l'agencement de la piste totale en tant qu'une piste de mouvement des N pavés de détection (120A, 120B, 120C) ; et
le calcul de la position du centre du bouton (100) à l'aide de la formule du rayon du cercle circonscrit selon la piste de mouvement ;
dans lequel une partie recouverte résultant d'au moins deux des N pistes de rotation est considérée comme une seule piste de rotation.
